# EUROPEAN PATENT SPECIFICATION

(11) **EP 1 878 612 B1**
(45) Date of publication and mention of the grant of the patent: **25.05.2011**
(21) Application number: 07012143.9
(22) Date of filing: 21.06.2007
(51) Int. Cl.: B60N 3/08, B60N 3/10

(54) **Driver's seat structure for heavy construction equipment having receptacles**
Fahrersitzstruktur für Baumaschinen mit Anschlüssen
Structure de siège de conducteur dotée de réceptacles pour équipement lourd de construction

(30) Priority: 13.07.2006 KR 20060065742
(43) Date of publication of application: 16.01.2008
(73) Proprietor: Volvo Construction Equipment Holding Sweden AB, 631 85 Eskilstuna (SE)
(72) Inventor: Kim, Hak Shin 202-1703 Hanil 2nd Town, Hoiwon-gu Masan (KR)
(74) Representative: Dr. Weitzel & Partner

(56) References cited:
- EP-A- 1 652 724
- DE-A1-102005 051 826
- JP-A- 2006 015 881

## Description

### CROSS-REFERENCE TO RELATED APPLICATION

This application is based on and claims priority from Korean Patent Application No. 10-2006-65742, filed on July 13, 2006 in the Korean Intellectual Property Office.

### BACKGROUND OF THE INVENTION

### 1. Field of the Invention

The present invention relates to a driver's seat structure having receptacles in which a beverage vessel or an ashtray is selectively stored in a receptacle formed at a surrounding portion of a driver's seat, and in particular to a driver's seat structure having receptacles in which a beverage vessel or an ashtray is selectively stored in a receptacle installed where a driver's hand can easily reach, so that a driver can conveniently use an ashtray or a beverage vessel depending on a driver's habit or preference without leaving a driver's seat, with the receptacle being installed in at least two portions.

### 2. Description of the Background Art

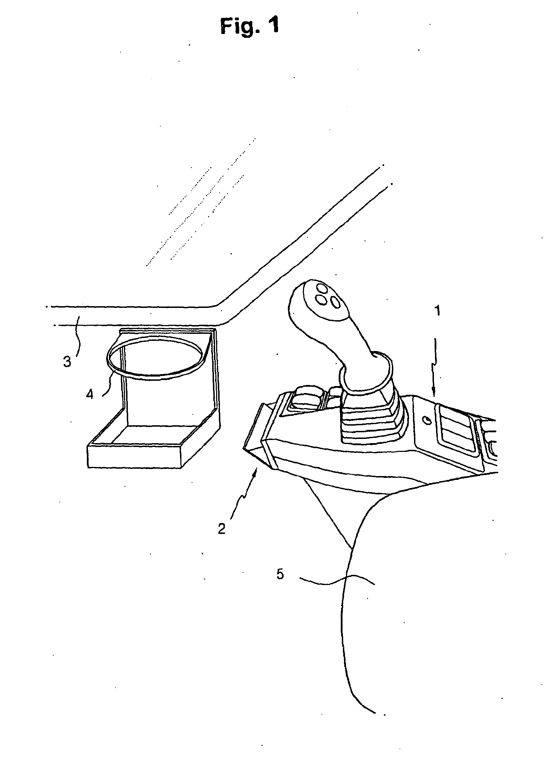

Figure 1 is a perspective view illustrating a construction that a cup holder and an ashtray are engaged at a front side of a driver's seat in the conventional art.

As shown therein, an ashtray 2 is installed at a front side of a console box of one side of a driver's seat 5 of heavy construction equipment. A cup holder 4 is installed at a lateral panel 4 of the driver's cab for storing a beverage vessel(for example, beverage can, water cup, beverage bottle, etc). As the cup holder 4 and the ashtray 2 are fixed at certain positions, a driver has some problems when using the cup holder 4 or the ashtray depending on a driver's habit or preference. In case that a driver is a smoker, it is needed to install an ashtray at a certain position so that a driver can use the same without leaving a driver's seat. Namely, the ashtray 2, which is relatively more frequently used as compared to the cup holder 4, should be installed where a driver's hand can easily reach.

In case that a driver is a non-smoker, the ashtray 2 is not needed in the course of work. In this case, since the driver frequently uses a beverage vessel stored in a cup holder 4, the cup holder 4, which is more frequently used as compared to the ashtray 2, should be installed at a nearer position so that the user can use the same conveniently.

In the conventional art, since the cup holder 4 and the ashtray 2 are separately installed at different positions, the number of parts disadvantageously increases in the course of a driver's cab layout design and manufacture of equipment, so that the unit cost increases.

EP-A-1 652 724 which forms the closest state of the art with the features known therefrom summarized in the preamble of claim 1 discloses a driver's cab of heavy construction equipment with a driver's seat structure having receptacles, comprising an ashtray and a cup holder. The receptacles are not able to selectively receive a beverage vessel or an ashtray, and do not comprise a holder with a flexible grip.

JP 2006 015881 discloses a movable type ashtray which could be hooked to an upper edge part of a finisher part on the surface of a cup holder device.

DE 10 2005 051 821 A1 discloses an adapter for a beverage vessel for inserting a beverage vessel with a predetermined diameter into a holder with a relatively greater diameter.

### SUMMARY OF THE INVENTION

Accordingly, it is an object of the present invention to provide a driver's seat structure having receptacles in which a beverage vessel or an ashtray is selectively stored in at least two receptacles installed where a driver's hand can easily reach depending a driver's habit or preference, so that a driver can conveniently use an ashtray or a beverage vessel without leaving a driver's seat in the course of work.

It is another object of the present invention to provide a driver's seat structure having receptacles in which when a driver works for long time without leaving a driver's seat, it is easy to smoke or drink beverage in comfortable posture without leaving a driver's seat for thereby enhancing workability, and a driver's various demands can be satisfied, and a driver's cab space may be more usefully used.

To achieve the above objects, there is provided a driver's cab with the features of claim 1.

There is further provided a holder which is received in each receptacle and supports an ashtray or a beverage vessel which is selectively stored in a corresponding receptacle, so that the receptacles can have compatibility.

According to the invention, there is further provided a flexible rib which is protruded from an inner surface of the holder, so that a movement owing to a diameter difference between the holder and the ashtray or a diameter difference between the holder and the beverage vessel is prevented.

The holder is preferably made of a rubber material.

One between the receptacles is formed at a console box of a driver's seat.

The other one between the receptacles is formed at a lateral panel beside a driver's seat.

One between the receptacles is formed at a console box of a driver's seat, and the other one between the receptacles is formed at a lateral panel beside a driver's seat.

The receptacle is formed at both left and right sides of a driver's seat, or the receptacle is formed at one between left and right sides of a driver's seat.

The receptacle is installed where a driver's hand can reach from a driver's seat.

### BRIEF DESCRIPTION OF THE DRAWINGS

The present invention will become better understood with reference to the accompanying drawings which are given only by way of illustration and thus are not limitative of the present invention, wherein;
Figure 1 is a perspective view illustrating a construction that a cup holder and an ashtray are installed at a front side of a driver's seat in the conventional art;
Figure 2 is a schematic view illustrating a driver's seat structure of heavy construction equipment having receptacles according to an embodiment of the present invention;
Figure 3 is a view illustrating a holder engaged at a receptacle formed at a console box of a driver's seat of heavy construction equipment according to an embodiment of the present invention;
Figure 4 is a cross sectional view illustrating a receptacle of Figure 3;
Figure 5 is a view of a use state that a water cup is stored in a receptacle formed at a console box of a driver's seat of heavy construction equipment according to an embodiment of the present invention;
Figure 6 is a view of a use state that an ashtray is stored in a receptacle formed at a console box of a driver's seat of heavy construction equipment according to an embodiment of the present invention;
Figure 7 is a view of a use state that a water cup is stored in a receptacle formed at a lateral panel of a driver's cab of heavy construction equipment according to another embodiment of the present invention;
Figure 8 is a view of a use state that a beverage cup is stored in a receptacle formed at a console box of a driver's seat and a water bottle is stored in a receptacle formed at a lateral panel of a driver's cab of heavy construction equipment according to further another embodiment of the present invention; and
Figure 9 is a schematic view illustrating an ashtray stored in a receptacle according to an embodiment of the present invention.

### DETAILED DESCRIPTION OF THE PREFERRED EMBODIMENTS

The preferred embodiments of the present invention will be described with reference to the accompanying drawings.

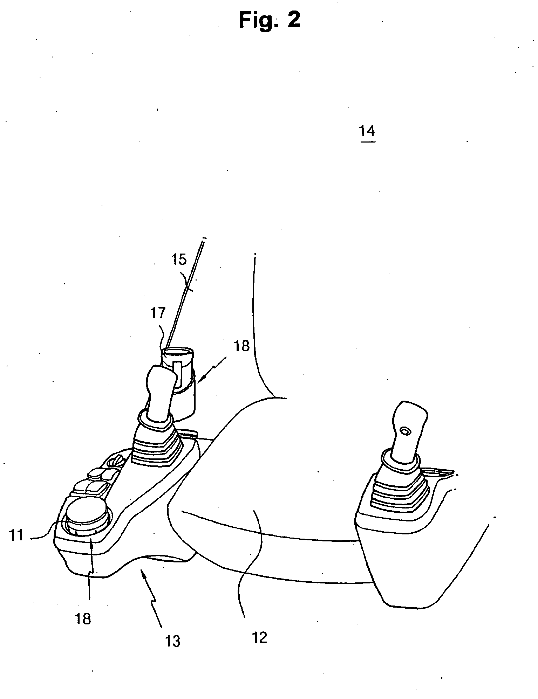

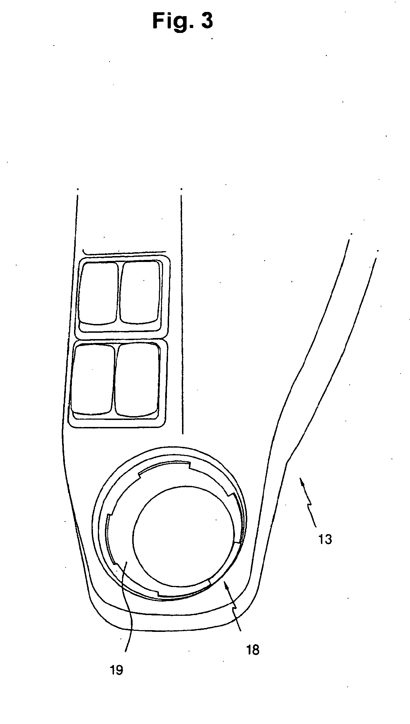

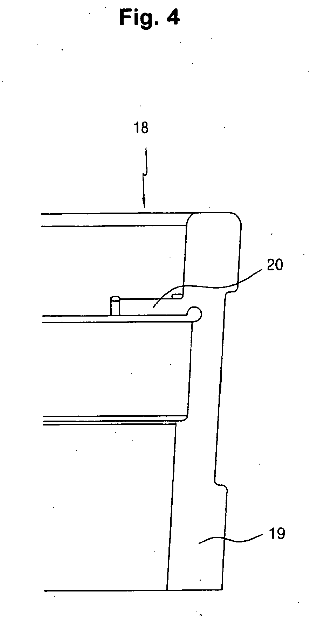

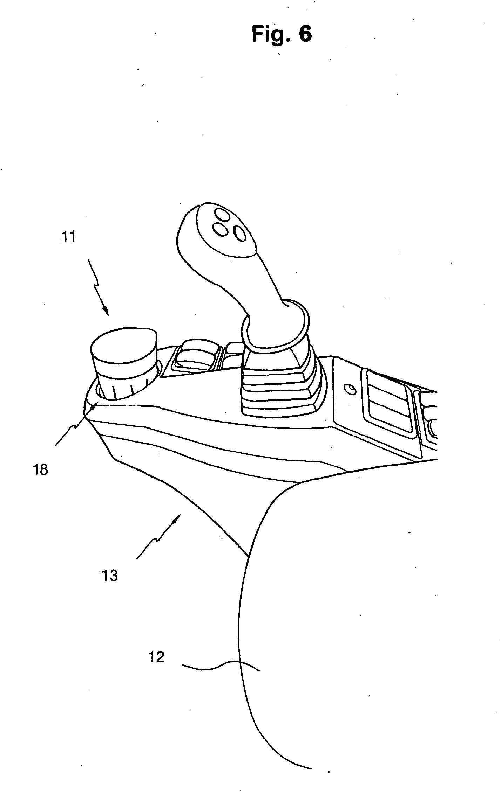

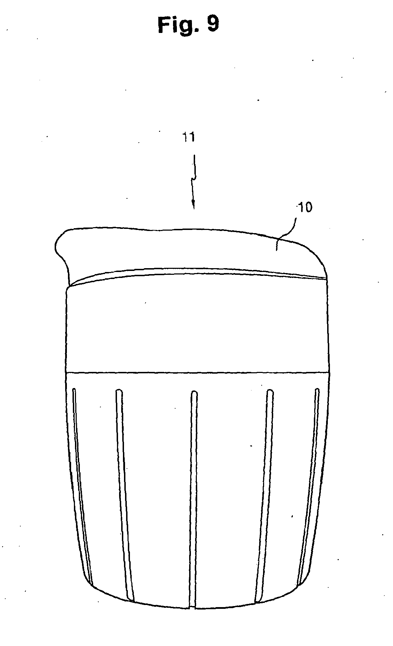

As shown in Figures 2 through 6 and Figure 9, in a driver's cab of heavy construction equipment, there is provided a driver's seat structure of heavy construction equipment having receptacles, which comprises a predetermined shaped receptacle 18 which is installed in at least two portions of a surrounding side of a driver's seat 12 and is able to selectively receive a beverage vessel 17 or an ashtray 11; and an ashtray 11 which is detachably stored in a receptacle which is not selected by the beverage vessel 17 in the receptacles 18.

The above ashtray 11 is formed in a cylindrical shape, and a cover 10 is opened and closed at an upper side of the ashtray 11.

One between the receptacles 18 is formed at a console box 13 of a driver's seat 12, and the other one between the receptacles 18 is formed at a lateral panel beside a driver's seat 12.

The receptacle 18 is formed at both left and right sides of a driver's seat 12, or the receptacle 18 is formed at one between left and right sides of a driver's seat 12.

There is further provided a rubber material holder 19 which is provided in each receptacle 18 for supporting an ashtray 11 or a beverage vessel 17 which is selectively stored in the receptacle, so that the receptacle has compatibility.

There is further provided a flexible rib 20 which is protruded from an inner surface of the holder 19, so that a movement owing to a diameter difference between the holder 19 and the ashtray 11 or a diameter difference between the holder 19 and the beverage vessel 17 is prevented.

The receptacle 18 is installed where a driver's hand can reach from a driver's seat 12.

The applications of a driver's seat structure of heavy construction equipment having receptacles according to the present invention will be described with reference to the accompanying drawings.

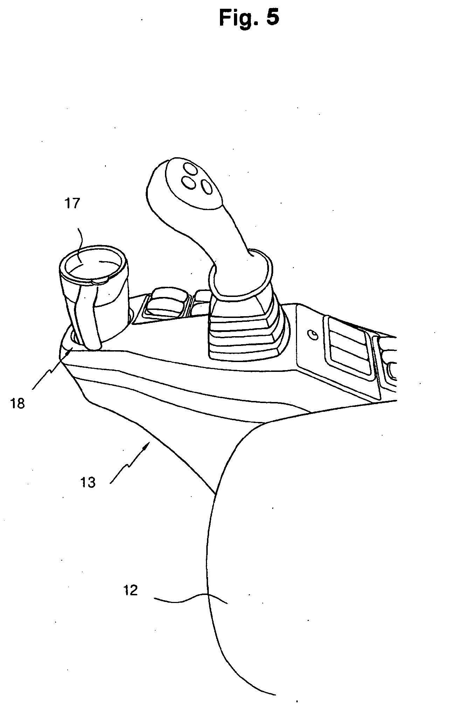

As shown in Figure 5, in case that a driver is a smoker or a non-smoker, a beverage vessel 17(for example, water cup is used) is stored in a receptacle 18 formed at a front side of the console box 13. Here, the receptacle 18 is installed where a driver's hand can easily reach at his seat, so that a driver can easily use a water cup stored in the receptacle unless a driver bends his upper body in the course of work.

Here, heavy construction equipment is generally used at an outdoor work place in sunlight for long time. In the present invention, the driver can drink water using a cup without leaving a driver's seat, so that workability is enhanced since work can be performed without stops.

As shown in Figures 2, 6 and 9, in case that a driver is a smoker, a cylindrical ashtray 11 is stored in the receptacle 18 formed at a front side of the console box 13. The driver more frequently uses the ashtray 11 as compared to the beverage vessel 17 in the course of work. So, the driver can easily use the ashtray 18 stored in the receptacle 18 formed where a driver's hand can reach.

Here, the beverage vessel 17 may be stored in the receptacle 18 formed at the lateral panel 15 beside the driver's seat 12.

As shown in Figures 2, 3, 4 and 6, the receptacle 18 is compatible since it can selectively receive the ashtray 11 or the beverage vessel 17. The ashtray 11 or the beverage vessel 17 can be selectively stored in a corresponding receptacle 18 having an elastic rubber holder 19 even when the holder 19, the cylindrical ashtray 11, the holder 19 and the beverage vessel 17 have different sizes.

A flexible rib 20 protruded from an inner surface of the holder 19 surrounds and supports the ashtray 11 or the beverage vessel 17. With the above construction, even when the holder 19 and the ashtray 11 or the holder 19 and the beverage vessel 17 have different diameters, the ashtray 16 or the beverage vessel 17 can be stably supported in the receptacle without any movement.

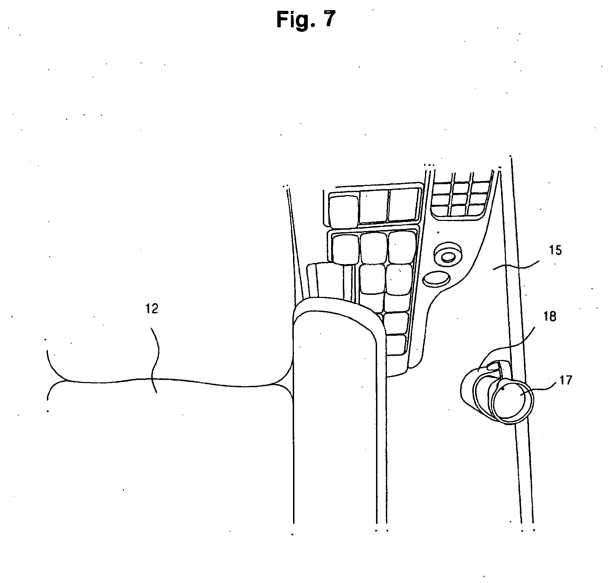

As shown in Figure 7, in case that a driver is a non-smoker or a smoker, a beverage vessel 17(for example, water cup is used) is stored in the receptacle 18 formed at an inner surface of the lateral panel 15 beside the driver's seat 12. At this time, since the receptacle 18 is installed at the lateral panel 15 where a driver's hand can easily reach, the driver does not need to bend his upper body to get the water cup stored in the receptacle 18.

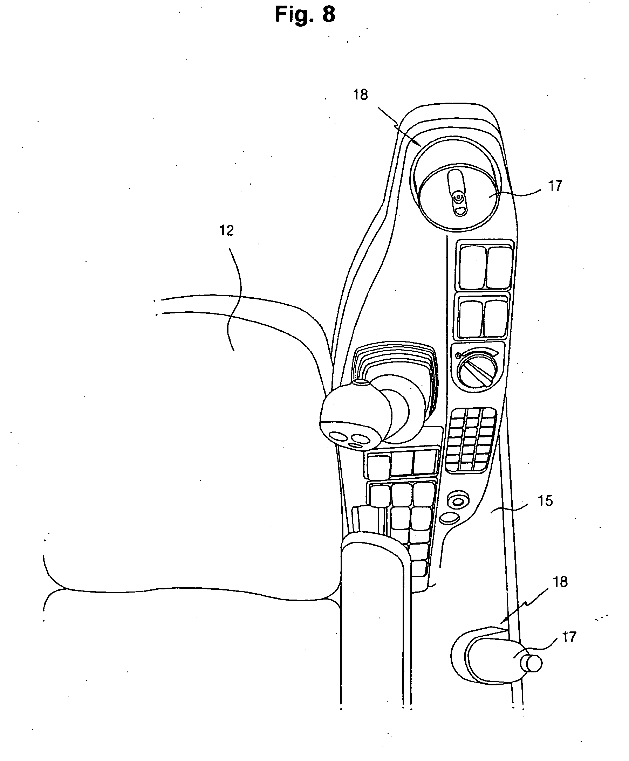

As shown in Figure 8, in case that a driver is a non-smoker or a smoker, a beverage vessel 17(for example, beverage cup is used) is stored in the receptacle 18 formed at a front side of the console box 13, and a beverage vessel 17(for example, water bottle is used) is stored in the receptacle 18 formed at the lateral panel 15.

In the present invention, since a plurality of receptacles 18 are installed where the driver's hand can easily reach in the driver's cab, the driver does not need to bend his upper body for using a beverage can or a water bottle stored in the receptacle 18 in the driver's cab.

A beverage vessel 17 or an ashtray 11 can be selectively stored in the receptacles 18 installed whether the driver's hand can easily reach in the driver's cab. So, the driver can use the ashtray 11 stored in the receptacle 18 or the beverage vessel 17 stored in the receptacle 18 without leaving the driver's seat depending on the driver's habit or preference.

In the above, it was described that the receptacle according to an embodiment of the present invention is installed at a console box installed at a surrounding portion of a driver's seat of heavy construction equipment or at a lateral panel beside a driver's seat. It is possible to install the receptacle at a certain place where a driver's hand can easily reach from a driver's seat in the driver's cab. Namely, a beverage vessel or an ashtray can be selectively stored in a corresponding receptacle depending on a driver's habit or preference.

As described above, the driver's seat structure of heavy construction equipment having receptacles according to the present invention has the following advantages.

The receptacles, which may selectively receive a beverage vessel or an ashtray depending on a driver's habit or preference, are installed at a place where a driver's hand can easily reach from a driver's seat, so that a driver can use an ashtray or a beverage vessel without leaving a driver's seat in the course of work.

In addition, when a driver works for long time, a driver can smoke or drink beverage in a comfortable posture without leaving a driver's seat, so that workability is enhanced, and a driver's cab layout can be more easily designed for thereby enhancing market compatibility.

## Claims

1. A driver's cab of heavy construction equipment with a driver's seat structure of heavy construction equipment having receptacles, **characterized by** comprising predetermined shaped receptacles (18) which are installed in at least two portions of a surrounding side of a driver's seat (12) and are able to selectively receive a beverage vessel (17) for an ashtray (11); each receptacle receiving a holder; and
an ashtray (11) which is detachably stored in a receptacle (18) which is not selected by the beverage vessel (17) in the receptacles (18); wherein each holder (19) comprises a flexible rib (20) which is protruded from an inner surface of the holder (19), so that a movement owing to a diameter difference between the holder (19) and the ashtray (11) or a diameter difference between the holder (19) and the beverage vessel (17) is prevented; and wherein one between the receptacles (18) is formed at a console box (13) of the driver's seat, and/or wherein the other one between the receptacles is formed at a lateral panel (15) beside the driver's seat (12).

2. The structure of either claim 1 or claim 2, wherein said holder (19) is made of a rubber material.

## Patentansprüche

1. Fahrerkabine von schweren Baufahrzeugen mit einer Fahrersitzstruktur schwerer Baufahrzeuge mit Aufnahmen, **dadurch gekennzeichnet, dass** sie Aufnahmen (18) mit vorher festgelegter Form umfasst, die an mindestens zwei Stellen einer umgebenden Seite eines Fahrersitzes (12) eingebaut sind und geeignet sind, wahlweise ein Getränkegefäß (17) oder einen Aschenbecher (11) aufzunehmen, wobei jede Aufnahme einen Halter aufnimmt; und
einen Aschenbecher (11), der herausnehmbar in einer Aufnahme (18) untergebracht Ist, die nicht für das Getränkegefäß (17) in den Aufnahme (18) ausgewählt wurde, wobei jeder Halter (19) eine flexible Rippe (20) umfasst, die von einer Innenfläche des Halters (19) vorsteht, so dass eine Bewegung infolge eines Durchmesserunterschieds zwischen dem Halter (19) und dem Aschenbecher (11) oder eines Durchmesserunterschieds zwischen dem Halter (19) und dem Getränkegefäß (17) verhindert wird; und wobei eine der Aufnahmen (18) an einer Konsolenbox (13) eines Fahrersitzes und/oder die andere Aufnahme an einer Seitenplatte (15) neben dem Fahrersitz (12) gebildet ist.

2. Struktur gemäß Anspruch 1 oder 2, wobei der Halter (19) aus einem Gummimaterial gefertigt ist.

## Revendications

1. Cabine de conduite d'un engin de chantier lourd avec une structure de siège de conducteur de matériel de chantier lourd comportant des réceptacles, **caractérisée en ce qu'**elle comprend
des réceptacles (18) d'une forme prédéterminée, qui sont installés dans au moins deux parties d'un côté périphérique d'un siège de conducteur (12) et peuvent recevoir sélectivement un récipient de boisson (17) ou un cendrier (11), chaque réceptacle recevant une fixation ; et
un cendrier (11) qui est rangé de façon à pouvoir être enlevé dans un réceptacle (18) qui n'est pas occupé par le récipient de boisson (17) parmi les réceptacles (18),
dans laquelle la fixation (19) comprend une nervure flexible (20) qui dépasse d'une surface intérieure de la fixation (19), de sorte qu'un mouvement dû à une différence de diamètre entre la fixation (19) et le cendrier (11) ou à une différence de diamètre entre la fixation (19) et le récipient de boisson (17) est empêché ; et dans laquelle l'un des réceptacles (18) est formé sur un caisson de console (13) du siège du conducteur et/ou dans laquelle l'autre des réceptacles est formé sur un panneau latéral (15) à côté du siège du conducteur (12).

2. Structure selon la revendication 1 ou 2, dans laquelle ladite fixation (19) est faite d'un matériau en caoutchouc.
